# EUROPÄISCHE PATENTSCHRIFT

(11) **EP 3 387 720 B1**
(45) Veröffentlichungstag und Bekanntmachung des Hinweises auf die Patenterteilung: **08.01.2020**
(21) Anmeldenummer: 16806013.5
(22) Anmeldetag: 28.11.2016
(51) Int. Cl.: H02B 1/052

(54) **ANREIHBARES BAUELEMENT**
SIDE-BY-SIDE COMPONENT
COMPOSANT JUXTAPOSABLE

(30) Priorität: 08.12.2015 DE 202015106673 U
(43) Veröffentlichungstag der Anmeldung: 17.10.2018
(73) Patentinhaber: H & B Electronic GmbH & Co. KG, 75392 Deckenpfronn (DE)
(72) Erfinder: SIEHLER, Achim, 75365 Calw (DE); BAYERBACH, Jan, 75365 Calw (DE); HEIMSCH, Jochen, 70734 Fellbach (DE)
(74) Vertreter: Wacker, Jost Oliver
(86) Internationale Anmeldenummer: PCT/EP2016/078994
(87) Internationale Veröffentlichungsnummer: WO 2017/097622

(56) Entgegenhaltungen:
- EP-A1- 1 672 743
- US-A1- 2007 008 708

## Beschreibung

Die Erfindung betrifft ein anreihbares Bauelement, wie ein elektrisches oder elektronisches Schalt- und Steuergerät, nach dem Oberbegriff des Anspruchs 1. Dieses anreihbare Bauelement weist ein für die Aufnahme eines elektrischen/elektronischen Bauteils vorgesehenes Gehäuse und eine aufrastbare Klemmeinrichtung auf, die für die Anbringung des Bauelementes an einer Tragschiene dient. Die Tragschiene kann dabei beispielsweise durch eine Hutschiene zur Aufnahme eines Verbands an mehreren Bauelementen gebildet sein, wobei die Bauelemente jeweils Mittel zur elektrischen Kontaktierung benachbarter Bauelemente aufweisen können. Die Klemmeinrichtung weist hierzu zwei Rast-/Greifhaken auf, die in zueinander entgegengesetzter Richtung zwischen einer Offenstellung und einer Befestigungsstellung verlagert werden können. Ferner ist ein Kraftumlenkmechanismus zur Verstellung der Rast-/Greifhaken zwischen der Offenstellung und der Befestigungsstellung vorgesehen, der mittels eines Betätigungselementes betätigt werden kann, das von einer Außenseite mit einer Stellkraft beaufschlagt wird. Dabei begrenzen die Rast-/Greifhaken einen freien Öffnungsabstand, der für die lösbare Befestigung an der Tragschiene in der Offenstellung größer und in der Befestigungsstellung geringer ist als eine Tragschienenerstreckung der für die Befestigung vorgesehenen Tragschiene. Hierdurch können die Rast-/Greifhaken an einer entsprechend dimensionierten Tragschiene in stabiler Weise verrastet beziehungsweise in Eingriff gebracht werden.

Derartige anreihbare Bauelemente ermöglichen dabei ein einfaches Aufrasten auf die betreffende Tragschiene in gerader Bewegungsrichtung und ohne Verkippen beispielsweise bei der Herstellung eines Verbandes aus mehreren Bauelementen eines Schaltschranks. Falls eines dieser Bauelemente wieder ausgebaut oder ausgetauscht werden soll, wird der Kraftumlenkmechanismus von außen mit einer Stellkraft beaufschlagt, die die Rast-/Greifhaken in die Offenstellung verbringt. In dieser ist der freie Öffnungsabstand zwischen den Rast-/Greifhaken ausreichend groß, um das Bauelement wiederum entlang einer geraden Bewegungsrichtung und ohne Verkippen von der Tragschiene entfernen zu können.

US 2007/008708 A1 offenbart ein anreihbares Bauelement mit einem für die Aufnahme eines elektrischen/elektronischen Bauteils vorgesehenen Gehäuse und mit einer Klemmeinrichtung für die Anbringung an einer Tragschiene. Dabei weist die Klemmeinrichtung zwei Rast-/Greifhaken, die in zueinander entgegengesetzte Richtung zwischen einer Offenstellung und einer Befestigungseinstellung verlagerbar sind, und einen Kraftumlenkmechanismus auf, der zur Verstellung der Rast-/Greifhaken zwischen der Offenstellung und der Befestigungsstellung dient. Hierzu kann dieser mittels eines Betätigungselementes betätigt werden, das von einer Außenseite mit einer Stellkraft beaufschlagbar ist.

Aus DE 197 09 811 A1 ist ein anreihbares Gerät bekannt, das sich über zwei Halteschieber auf einer Tragschiene befestigen lässt. Mittels eines an einer Oberseite vorgesehenen Lösehebels können die Halteschieber von einer Haltestellung in eine Freistellung verlagert werden, um das an der Tragschiene befestigte Gerät von dieser entfernen zu können. Der Lösehebel ist hierbei über einen Kraftumlenkmechanismus mit den beiden Halteschiebern verbunden, der mehrere Glieder aufweist, die über Filmscharniere verbunden sind und ein doppeltes Kniegelenk ausbilden.

DE 600 32 595 T2 zeigt eine Befestigungsvorrichtung zur Anbringung von Modulen an einer Schiene, bei der zwei Greifhaken an jeweils einem Schieber ausgebildet sind, die mittels Schraubenfedern in eine Greifstellung vorgespannt sind. Um beide Greifhaken in eine Offenstellung verlagern zu können, ist an einem verdrehbaren Betätigungselement ein elliptisches Profil ausgebildet, das an beiden Schiebern anliegt. Durch Verlagerung des langen Querschnitts des elliptischen Profils zwischen die beiden Schieber werden diese entgegen der Kraft der Schraubenfedern in die Offenstellung verlagert, in der die Befestigungsvorrichtung von der Schiene abgenommen werden kann.

EP 1 672 743 B1 beschreibt eine Befestigungsvorrichtung zur Anbringung eines Moduls an einer Hutschiene, bei der ein oberer Greifhaken einteilig mit einem linear verlagerbaren Betätigungselement ausgebildet ist. Ferner ist jeweils ein Betätigungsarm zweier verschwenkbarer unterer Hakenelemente an dem Betätigungselement angelenkt. Durch Ziehen an dem Betätigungselement können dadurch der obere Greifhaken nach oben verlagert und die unteren Hakenelemente nach unten verschwenkt werden, um die Befestigungsvorrichtung in die Offenstellung zu verbringen.

EP 1 742 315 A1 zeigt ein Modulgehäuse zum Aufrasten auf eine Tragschiene, in dem eine einteilige Greifeinrichtung vorgesehen ist, die zwei Schieber umfasst, zwischen denen ein Federelement wirkt. Das Federelement spannt die beiden Schieber, die zum Hintergreifen der Tragschiene dienen, gegeneinander in eine Greifstellung vor. Durch Verdrehen eines Spreizstiftes, der in einem Spalt der Greifeinrichtung ein elliptisches Profil aufweist, können die beiden Schieber entgegen der Federkraft in eine Offenstellung verlagert werden, in der das Modulgehäuse von der Tragschiene abgenommen werden kann.

Nachteilig an den bekannten anreihbaren Geräten ist, dass deren Kraftumlenkmechanismus nach mehrfacher Betätigung und/oder nach einer längeren Lebensdauer häufig einen Defekt aufweist und sich die Klemmeinrichtung nur noch schwer oder gar nicht von der Tragschiene entfernen lässt.

Die Aufgabe der Erfindung ist es, bei einem gattungsgemäßen anreihbaren Gerät die genannten Nachteile zu vermeiden und auch über eine lange Lebensdauer hinweg eine störungsfreie Funktion der Klemmeinrichtung zu gewährleisten.

Diese Aufgabe wird durch ein anreihbares Gerät mit den Merkmalen des Anspruchs 1 gelöst. Dabei weist der Kraftumlenkmechanismus ein betätigungselementseitiges Auslenkprofil und ein hakenseitiges Verlagerungsteil auf, das einen Verformungsabschnitt aufweist, der durch eine Verlagerungskraft verformbar ist, wobei zwischen dem Auslenkprofil und dem Verformungsabschnitt ein Gleitkontakt ausgebildet ist oder ausgebildet werden kann. An diesem Gleitkontakt kann der Verformungsabschnitt direkt durch das Auslenkprofil mit der Verlagerungskraft beaufschlagt werden. Die Verlagerungskraft erzeugt dabei eine Verformung beziehungsweise Streckung des Verformungsabschnittes, wodurch der betreffende Rast-/Greifhaken verlagert wird. Hierdurch ist in Abhängigkeit des jeweiligen Verlagerungsweges des Betätigungselementes eine exakt geführte und in ihrer Länge vorbestimmte hakenseitige Verlagerung möglich. Die direkte Kraftbeaufschlagung vom Auslenkprofil auf den Verformungsabschnitt gewährleistet dabei über eine lange Lebensdauer hinweg eine zuverlässige Funktion des Kraftumlenkmechanismus und der Klemmeinrichtung insgesamt. Durch die Übertragung der Verlagerungskraft von der Betätigungselementseite zur Rast-/Greifhakenseite über einen Gleitkontakt können die betreffenden Teile voneinander getrennt hergestellt und dabei in Abhängigkeit ihrer jeweiligen Funktion und der jeweils zu erwartenden mechanischen Beanspruchung ausgeformt werden. Insbesondere können das betätigungselementseitige Auslenkprofil und das hakenseitige Verlagerungsteil hierzu unabhängig voneinander dimensioniert und/oder aus verschiedenen Materialien hergestellt werden. Auf diese Weise können die einzelnen Teile des Kraftumlenkmechanismus jeweils so ausgebildet werden, dass über eine vorgesehene Lebensdauer hinweg ein störungsfreies Festklemmen und Lösen des anreihbaren Bauelementes gewährleistet werden kann. Zudem ermöglicht der vorgesehene Gleitkontakt eine besonders einfache Montage der Klemmeinrichtung insgesamt.

Dabei ist es günstig, wenn der Verformungsabschnitt zwischen einem Lagerabschnitt und einem mit dem Rast-/Greifhaken verbundenen Bewegungsabschnitt des Verlagerungsteils angeordnet ist. Hierdurch kann das Verlagerungsteil über den Lagerabschnitt beispielsweise am Gehäuse des Bauelementes positionsstabil gelagert werden, während der Bewegungsabschnitt über den Verformungsabschnitt verlagert werden kann. Auf diese Weise können ungewollte Verwindungen des Verlagerungsteils während der Verstellung des Bewegungsabschnittes verhindert werden.

Vorteilhafterweise ist der Bewegungsabschnitt dabei linear geführt, was einen raschen und stabilen Wechsel von der Offenstellung in die Befestigungsstellung und umgekehrt ermöglicht.

Zudem ist es günstig, wenn der Verformungsabschnitt durch paarweise angeordnete Verformungselemente gebildet ist, deren Abstand zueinander durch das Auslenkprofil verändert werden kann. Durch diese paarweise Anordnung der Verformungselemente kann der Bewegungsabschnitt gegenüber dem Lagerabschnitt besonders stabil gehalten und geführt werden. Beispielsweise sind die Verformungselemente dabei durch zwei elastische Federelemente mit zueinander gerichteten konvexen Anlageflächen gebildet, die mittels des Auslenkprofils auseinandergespreizt werden können. Auf diese Weise kann ein besonders funktionsstabil arbeitender und kostengünstig herstellbarer Kraftumlenkmechanismus zur Verfügung gestellt werden.

In jedem Fall ist es günstig, wenn der Kraftumlenkmechanismus zwei betätigungselementseitige Auslenkprofile aufweist, die mit jeweils einem hakenseitigen Verlagerungsteil zusammenwirken, wobei diese über den jeweiligen Gleitkontakt mit zueinander entgegen gesetzten Verlagerungskräften beaufschlagbar sind. Auf diese Weise ist es möglich, die hakenseitigen Verlagerungsteile beziehungsweise die mit diesen verbundenen Rast-/Greifhaken über den Kraftumlenkmechanismus gleichzeitig in entgegen gesetzte Richtungen zu verlagern, um deren Öffnungsabstand zu verringern oder zu vergrößern. Dabei ist es günstig, wenn der Kraftumlenkmechanismus in die Befestigungsstellung vorgespannt ist, um nach der Anbringung an der betreffenden Tragschiene eine stabile Befestigung des Bauelementes zu gewährleisten.

Vorteilhafterweise sind die hakenseitigen Verlagerungsteile einteilig mit dem jeweils zugeordneten Rast-/Greifhaken ausgebildet, was eine direkte Kraftübertragung auf die Rast-/Greifhaken gewährleistet und somit eine besonders stabile Befestigung an der betreffenden Tragschiene ermöglicht. Dabei ist es günstig, wenn der Kraftumlenkmechanismus mittels einer Federeinrichtung vorgespannt ist, die mit dem Betätigungselement oder mit den beiden Verlagerungsteilen einteilig ausgebildet ist und sich am Gehäuse abstützt. Hierdurch kann der Kraftumlenkmechanismus und die Klemmeinrichtung insgesamt kostengünstig und aus nur wenigen Teilen hergestellt und besonders einfach montiert werden.

In einer besonders vorteilhaften Ausführungsform sind an den Rast-/Greifhaken zueinander entgegengesetzt gerichtete Anpressschrägen ausgebildet, über die die Rast-/Greifhaken durch Anpressen gegen die Tragschiene entgegen der Vorspannung von der Befestigungsstellung in die Öffnungsstellung aufgespreizt werden können. Hierdurch kann die Klemmeinrichtung durch ledigliches Anpressen der in der Befestigungsstellung angeordneten Rast-/Greifhaken in die Offenstellung verlagert und das Bauelement dadurch in besonders komfortabler Weise entlang einer geraden Bewegungsrichtung und ohne Verkippen an der Tragschiene befestigt werden.

Zudem ist es vorteilhaft, wenn das hakenseitige Verlagerungsteil am Gehäuse gelagert ist, um insbesondere beim Anpressen des Bauelementes gegen die Tragschiene eine stabile Führung des hakenseitigen Verlagerungsteils zu gewährleisten.

Ferner ist es günstig, wenn das Betätigungselement einen Bedienabschnitt aufweist, der wenigstens in der Befestigungsstellung an einer Oberseite des Gehäuses von diesem absteht. Hierdurch kann auf das Betätigungselement auch im befestigten Zustand des Bauelementes an der Tragschiene in komfortabler Weise zugegriffen werden, um die Rast-/Greifhaken in die Offenstellung zu verbringen und das Bauelement somit wieder von der Tragschiene lösen zu können.

Vorteilhafterweise kann das Betätigungselement durch eine am Bedienabschnitt aufbringbare Stellkraft entlang einer linearen Führungsrichtung verlagert werden. Diese ermöglicht eine einfache Betätigung des Kraftumlenkmechanismus durch Zug- oder Druckbeaufschlagung.

Alternativ hierzu ist das Betätigungselement um eine Achse verdrehbar gelagert und kann durch Beaufschlagung des Bedienabschnittes mit einem Drehmoment betätigt werden. Die verdrehbare Ausführungsform des Betätigungselementes ermöglicht dabei ein besonders komfortables Umschalten von der Befestigungsstellung in die Offenstellung sowie einen besonders kompakten Aufbau der Klemmeinrichtung.

In einer besonders vorlteilhaften Ausführungsform des anreihbaren Bauelementes sind am Gehäuse Linearführungsmittel vorgesehen, mittels denen eine senkrecht zur Klemmeinrichtung beziehungsweise zum Öffnungsabstand der Rast-/Greifhaken gerichtete Linearführung erzeugt werden kann. Hierdurch ist es beispielsweise möglich, an einem bereits befestigten Bauelement ein zweites Bauelement derart entlang zu führen, dass dieses in exakt senkrechter Richtung auf die betreffende Hutschiene aufgesetzt werden kann.

Vorteilhafterweise weisen die Führungsmittel hierzu ein sich entlang einer Linearführungsrichtung erstreckendes Führungsprofil und eine sich entlang der Linearführungsrichtung erstreckende Führungsaufnahme auf. Dabei ist die Führungsaufnahme in Größe und Formgebung derart ausgebildet, dass sie zur geführten Aufnahme des Führungsprofils eines weiteren Bauelementes dient. Hierdurch kann jedes der anreihbaren Bauelemente in einfacher Weise so ausgebildet werden, dass es beim Anbringen sicher geführt werden und im bereits angebrachten Zustand selbst als sichere Führung dienen kann.

Besonders günstig ist es dabei, wenn das Führungsprofil eine senkrecht zur Linearführungsrichtung federnd verlagerbare Führungskante aufweist. Hierdurch können die Führungsmittel gleichzeitig als Rastmittel dienen, die senkrecht zur Linearführungsrichtung ein Verrasten zweier benachbarter Bauelemente ermöglicht. Hierdurch können beispielsweise auch zwei bereits an einer Hutschiene gehaltene Bauelemente durch seitliches Aneinanderdrücken miteinander verrastet werden.

Vorteilhafterweise sind an dem Gehäuse zudem jeweils zwei paarweise angeordnete Führungsprofile und Führungsaufnahmen angeordnet, wodurch eine besonders exakte Linearführung beziehungsweise eine besonders stabile Rastverbindung zwischen den betreffenden Bauelementen möglich ist.

Es wird darauf hingewiesen, dass alle oben beschriebenen Merkmale des erfindungsgemäßen Gegenstandes einzeln oder in Kombination untereinander austauschbar beziehungsweise kombinierbar sind, sofern ein Austausch oder eine Kombination derselben aus technischen Gründen nicht ausgeschlossen ist.

In den Figuren ist eine beispielhafte Ausführungsform der Erfindung dargestellt. Es zeigen:
- Figur 1: eine perspektivische Ansicht eines erfindungsgemäßen anreihbaren Bauelementes in einer Befestigungsstellung,
- Figur 2: eine perspektivische Ansicht einer Vorderseite eines Kraftumlenkmechanismus des anreihbaren Bauelementes nach Fig. 1,
- Figur 3: eine perspektivische Ansicht einer Rückseite des Kraftumlenkmechanismus nach Fig. 2,
- Figur 4: eine Draufsicht auf die Rückseite des Kraftumlenkmechanismus nach Fig. 3 in der Befestigungsstellung,
- Figur 5: eine Draufsicht auf die Rückseite des Kraftumlenkmechanismus nach Fig. 3 in einer Offenstellung,
- Figur 6A: eine vorderseitige Ansicht des anreihbaren Bauelementes nach Fig. 1 beim Lösen von einer Tragschiene,
- Figur 6B.: eine Seitenansicht des anreihbaren Bauelementes nach Fig. 6A,
- Figur 7A: eine vorderseitige Ansicht des anreihbaren Bauelementes im angebrachten Zustand an der Tragschiene
- Figur 7B.: eine Seitenansicht des anreihbaren Bauelementes nach Fig. 7A,
- Figur 8: eine perspektivische Ansicht einer alternativen Ausführungsform des Kraftumlenkmechanismus mit einem verdrehbaren Betätigungselement,
- Figur 9: eine perspektivische Ansicht einer weiteren alternativen Ausführungsform des anreihbaren Bauelementes mit Linearführungsmitteln,
- Figur 10A: einen Schnitt durch ein Gehäuse des Bauelementes nach Fig. 9 auf Höhe der Linearführungsmittel,
- Figur 10B: eine vergrößerte Ansicht des Details X aus Fig. 10A,
- Figur 11A: eine Draufsicht auf zwei aneinander geführte Bauelemente gemäß Fig. 9,
- Figur 11B: eine Draufsicht auf die Bauelemente nach Fig. 11A im fertig montierten Zustand,
- Figur 12A: eine Draufsicht auf zwei Bauelemente gemäß Fig. 9 in einem befestigten aber getrennten Zustand und
- Figur 12B: eine Draufsicht auf die Bauelemente nach Fig. 12A in einem verrasteten Zustand.

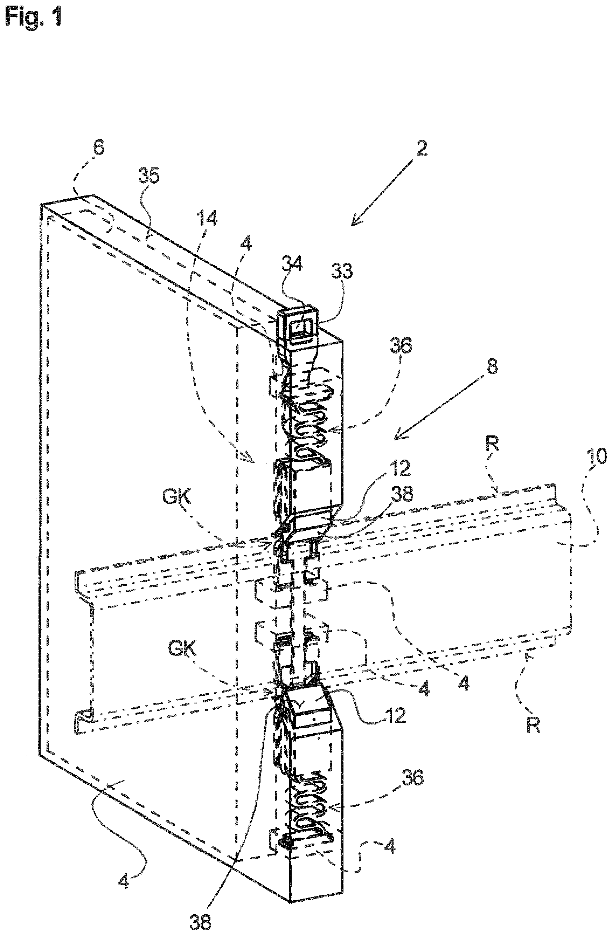

Fig. 1 zeigt ein anreihbares Bauelement 2 in Form eines elektrischen oder elektronischen Schalt- oder Steuergerätes. Dieses weist ein Gehäuse 4 auf, in dem wenigstens ein elektrisches/elektronisches Bauteil 6 untergebracht ist. Zudem ist an dem Gehäuse 4 eine insgesamt mit 8 bezeichnete Klemmeinrichtung vorgesehen, die zur Befestigung des Bauelementes 2 an einer Tragschiene 10 dient. Die Klemmeinrichtung 8 ist dabei derart ausgebildet, dass das Bauelement 2 an einer bestimmten marktüblichen Bauart der Tragschiene 10 befestigt werden kann, die beispielsweise in der Form einer sogenannten Hutschiene ausgebildet ist.

Die Klemmeinrichtung 8 weist hierzu zwei Rast-/Greifhaken 12 auf, mit denen die Tragschiene 10 an zwei voneinander abgewandten Rändern R umgriffen werden kann. Die Rast-/Greifhaken 12 können hierzu mittels eines Kraftumlenkmechanismus 14 von einer Befestigungsstellung, wie sie in den Fig. 1 dargestellt ist, in eine Offenstellung verbracht werden und umgekehrt.

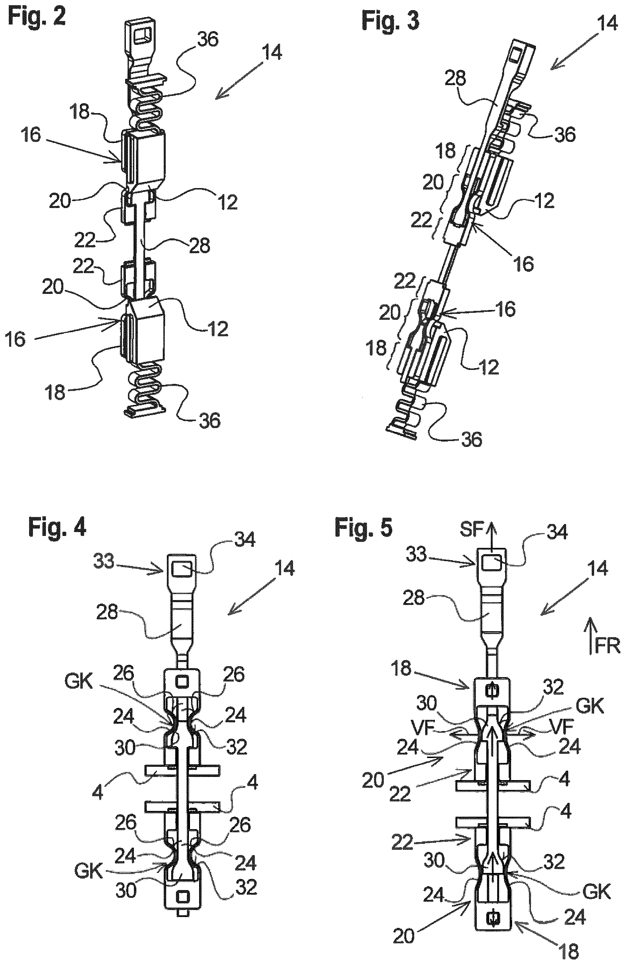

Der Kraftumlenkmechanismus 14 weist hierbei, wie insbesondere aus den Fig. 2 und 3 zu entnehmen ist, zwei hakenseitige Verlagerungsteile 16 auf, an denen jeweils einer der Rast-/Greifhaken 12 vorgesehen ist. Hierbei können die Verlagerungsteile 16 beispielsweise einteilig mit dem jeweiligen Rast-/Greifhaken 12 ausgebildet sein oder mit diesen alternativ eine stabile Verbindung aufweisen. In jedem Fall ist der Rast-/Greifhaken 12 dabei jeweils mit einem Bewegungsabschnitt 18 des Verlagerungsteils 16 verbunden, das über einen Verformungsabschnitt 20 an einem Lagerabschnitt 22 des Verlagerungsteils 16 gehalten ist. Die Lagerabschnitte 22 sind dabei jeweils am Gehäuse 4 beziehungsweise einem fest mit dem Gehäuse 4 verbundenen Teil fixiert während die Bewegungsabschnitte 18 verlagerbar sind und beispielsweise über das Gehäuse 4 linear geführt sein können.

Der Verformungsabschnitt 20 weist jeweils beispielhaft zwei bogenförmige elastische Federelemente 24 auf, die zwei einander zugewandte konvexe Anlageflächen 26 ausformen, wie insbesondere aus den Fig. 4 und 5 zu entnehmen ist.

Ferner weist der Kraftumlenkmechanismus 14 ein längliches Betätigungselement 28 auf, an dem zwei betätigungselementseitige Auslenkprofile 30 vorgesehen sind, die jeweils mit einem Paar der Federelemente 24 zusammen wirken. Hierzu bilden die Auslenkprofile 30 jeweils eine sich in eine Längsrichtung des Betätigungselementes 28 verjüngende Kontur 32 aus, die beidseitig mit den jeweiligen konvexen Anlageflächen 26 der hakenseitigen Verlagerungsteile 16 in einen Gleitkontakt GK bringbar ist.

Zudem ist an einem Ende des Betätigungselementes 28 ein Bedienabschnitt 33 vorgesehen, in den eine Eingriffsausnehmung 34 eingelassen ist, an der ein geeignetes Werkzeug wie beispielsweise ein Schraubendreher in Eingriff gebracht werden kann. Hierzu ragt der Bedienabschnitt 33 im eingebauten Zustand des Betätigungselementes 28 an einer Oberseite 35 aus dem Gehäuse 4 heraus (siehe Fig. 1).

Über den Bedienabschnitt 33 kann das Betätigungselement 34 durch Aufbringung einer Stellkraft SF entlang einer durch das Gehäuse 4 vorgegebenen Führungsrichtung FR verlagert werden. Wie in Fig. 5 dargestellt, wird hierdurch die im Wesentlichen keilförmige Kontur 32 der betätigungselementseitigen Auslenkprofile 30 jeweils zwischen die beiden Federelemente 24 des jeweiligen Verformungsabschnittes 20 verlagert, wodurch die Federelemente 24 in Folge des Gleitkontaktes GK mit der keilförmigen Kontur 32 der Auslenkprofile 30 zunehmend auseinander gespreizt werden.

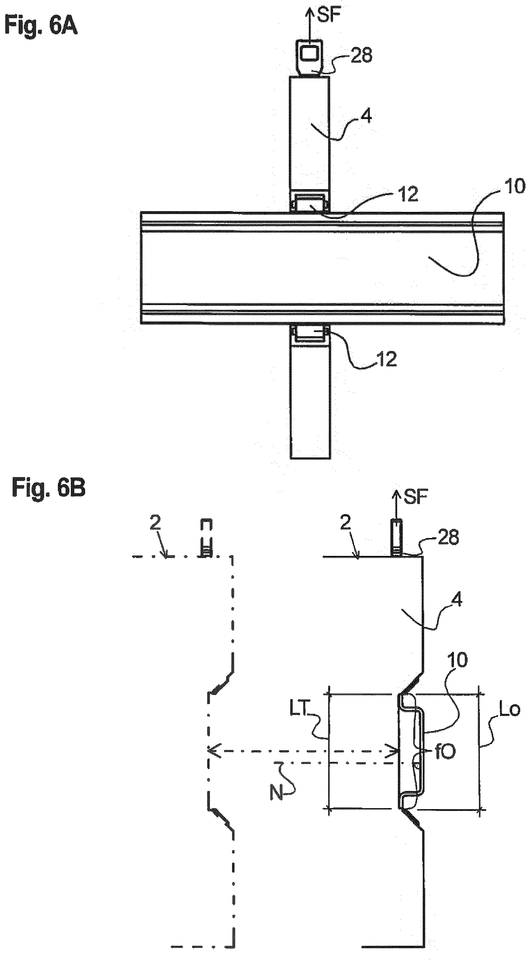

Da die Lagerabschnitte 22 der beiden Verlagerungsteile 16 hierbei am Gehäuse 4 fixiert sind, werden die Bewegungsabschnitt 18 hierbei durch die zunehmende Beabstandung der Federelemente 24 in linear geführter Weise von dem jeweils zugehörigen Lagerabschnitt 22 weg verlagert, wodurch auch die an den Bewegungsabschnitten 18 gehaltenen Rast-/Greifhaken 12 voneinander weg in die Offenstellung bewegt werden, wie sie in Fig. 6A dargestellt ist.

Die Rast-/Greifhaken 12 begrenzen hierbei, wie aus Fig. 6B zu entnehmen ist, einen freien Öffnungsabstand fO, der in der Offenstellung eine Länge Lo aufweist, die etwas größer ist als eine Erstreckung LT der Tragschiene 10. Hierdurch kann das Bauelement 2 in der Offenstellung der Klemmeinrichtung 8 in gerader Richtung entlang einer Normalen N zur Tragschiene 10 von dieser abgenommen oder auf diese aufgesetzt werden, wie in Fig. 6B dargestellt.

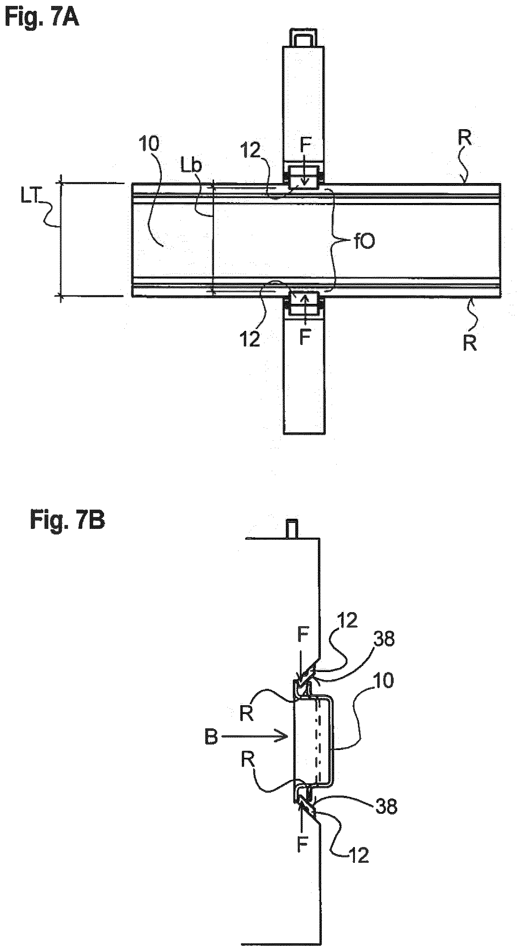

Bei fehlender Beaufschlagung des Betätigungselementes 28 mit der Stellkraft SF werden die Rast-/Greifhaken 10 in Folge einer Federkraft F dagegen in der Befestigungsstellung gemäß Fig. 7A gehalten, in der der freie Öffnungsabstand fO eine Länge Lb aufweist, die kleiner ist als die Erstreckung LT der Tragschiene 10. Im aufgesetzten Zustand des Bauelementes 2 auf der Tragschiene 10 gemäß Fig. 7A führt dies somit dazu, dass die Rast-/Greifhaken 12 in der Befestigungsstellung die Ränder R umgreifen und das Bauelement 2 dadurch an der Tragschiene 10 festgeklemmt ist.

Die Federkraft F wird hierbei an beiden Rast-/Greifhaken 12 mittels einer jeweiligen Federeinrichtung 36 erzeugt, die gemäß Fig. 1 zwischen dem Gehäuse 4, beziehungsweise einem mit diesem fest verbundenen Teil, und dem jeweiligen Rast-/Greifhaken 12 angeordnet ist und diesen dabei in Richtung der Befestigungsstellung vorspannt.

Zudem kann das Bauelement 2 auch ohne Beaufschlagung des Betätigungselementes 28 über den Bedienabschnitt 33 an der Tragschiene 10 befestigt werden. Hierzu wird die Klemmeinrichtung 8 gemäß Fig. 7B derart an der Tragschiene 10 angesetzt, dass die Rast-/Greifhaken 12 mit einer an ihnen jeweils ausgeformten Anpressschrägen 38 an einem der Ränder R anliegen. Durch eine anschließende Druckaufbringung mit einer Anpresskraft B, die ausreichend ist, um über die Anpressschrägen 38 die auf die Rast-/Greifhaken 12 einwirkende Federkraft F der Federeinrichtungen 36 zu überwinden, können die Rast-/Greifhaken 12 hierbei entgegen der Vorspannung in die Offenstellung gedrückt werden. Somit können die Rast-/Greifhaken 12 die Ränder R der Tragschiene 10 passieren, um diese anschließend in Folge der Rückstellkräfte der Federeinrichtungen 36 zu hintergreifen. Auf diese Weise ist eine Anbringung des Bauelementes 2 durch gerades Aufpressen entlang der Normalenrichtung N auf die Tragschiene 10 auch ohne die Verwendung von Werkzeug möglich.

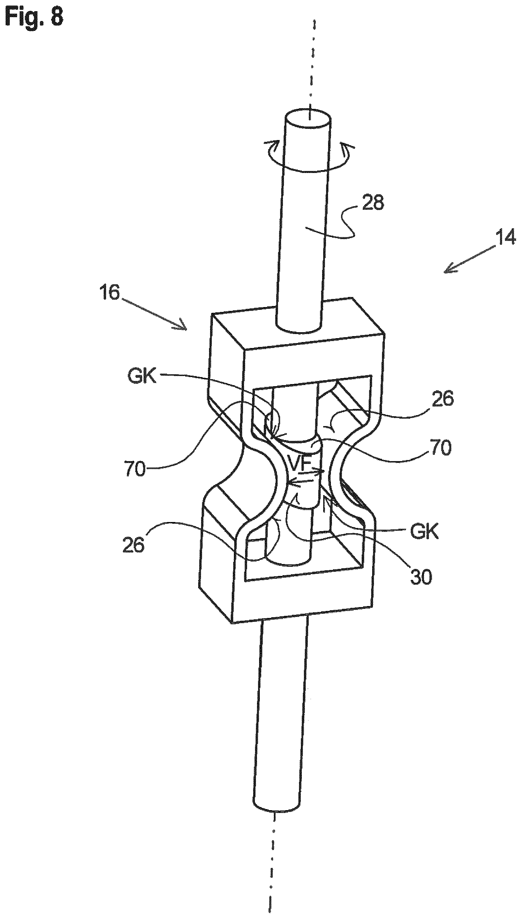

Wie in Fig. 8 dargestellt, kann der Kraftumlenkmechanismus 14 in einer weiteren Ausführungsform der Klemmeinrichtung 8 beispielsweise ein achsenförmiges Betätigungselement 28 aufweisen, an dem das betätigungselementseitige Auslenkprofil 30 durch zwei voneinander abgewandte Exzenternocken 70 gebildet ist. Durch Verdrehen des Betätigungselementes 28 können die Exzenternocken 70 derart in Gleitkontakt GK mit zwei Anlegeflächen 26 eines hakenseitigen Verlagerungsteils 16 entsprechend der Ausführungsform nach Fig. 2 bis 5 gebracht werden, dass diese durch die Verlagerungskraft VF auseinander gespreizt werden und dadurch den am Verlagerungsteil 16 gehaltenen Rast-/Greifhaken 12 (nicht dargestellt) in die Offenstellung oder in die Befestigungsstellung verlagern.

Abgesehen von der verdrehbaren Ausführung des Betätigungselementes 28 entspricht die Funktionsweise eines derartigen Kraftumlenkmechanismus der Funktionsweise der Ausführungsform nach den Fig. 6 und 7.

Bei den Ausführungsformen des Bauelementes 2 nach den Fig. 1 bis 7 oder 8 könnte auch ein Aufbau des Kraftumlenkmechanismus 14 vorgesehen werden, durch den dieser alternativ zu der jeweils dargestellten Funktionsweise durch Druckbeaufschlagung des Betätigungselementes 28 von der Befestigungsstellung in die Offenstellung verstellbar wäre (nicht dargestellt).

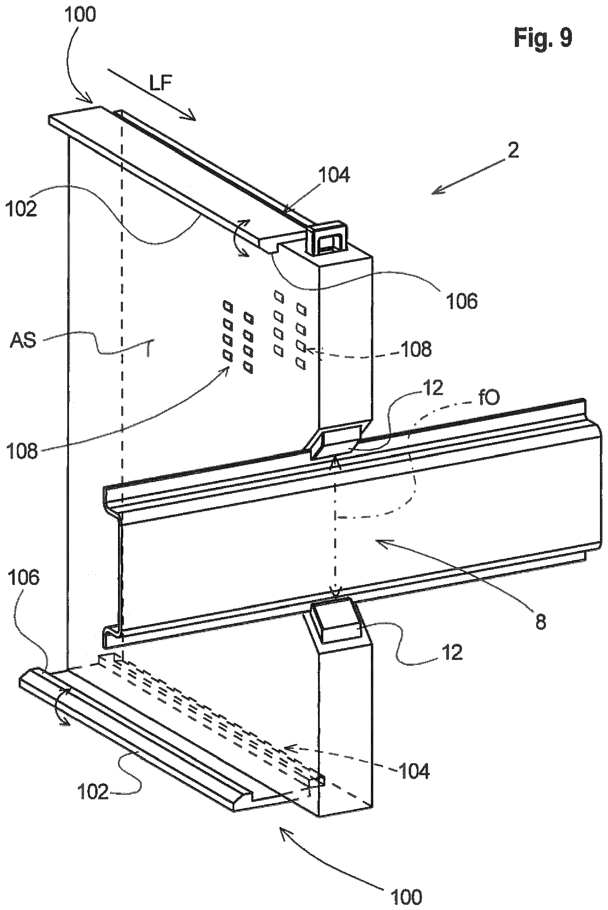

Figur 9 zeigt eine weitere Ausführungsform des anreihbaren Bauelementes 2, an dessen Gehäuse 4 Linearführungsmittel 100 vorgesehen sind. Mittels dieser Linearführungsmittel 100 ist dabei eine gegenseitige Verlagerung zweier Bauelemente 2 entlang einer Linearführungsrichtung LF möglich, die senkrecht zur Klemmeinrichtung 8 beziehungsweise zum Öffnungsabstand 11 zwischen den beiden Rast-/Greifhaken 12 gerichtet ist.

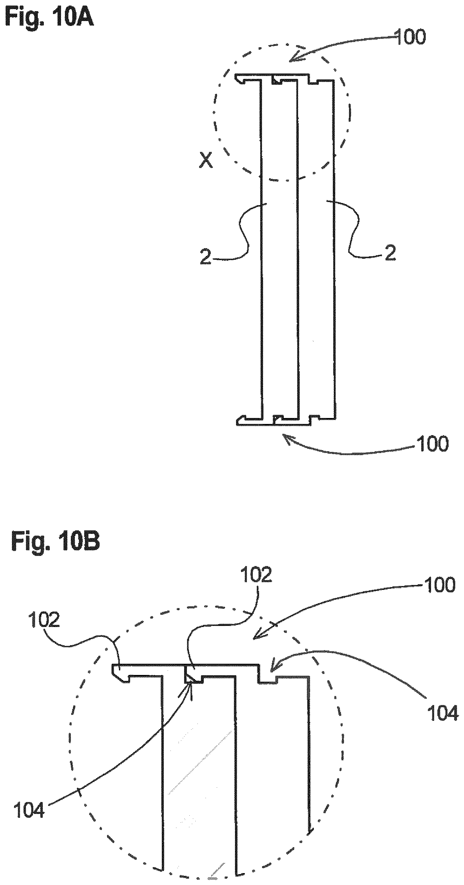

Hierzu weisen die Linearführungsmittel 100 paarweise angeordnete Führungsprofile 102 auf, die sich jeweils entlang der Linearführungsrichtung LF erstrecken. Ferner sind an einer von den Führungsprofilen 102 abgewandten Seite des Gehäuses 42 paarweise angeordnete Führungsaufnahmen 104 vorgesehen. Diese Führungsaufnahmen 104 sind dabei derart dimensioniert und geformt, dass sie die Führungsprofile 102 eines weiteren anreihbaren Bauelementes 2 führen und aufnehmen können, wie in den Figuren 10A und 10B dargestellt.

Hierbei können die Führungsprofile 102 derart ausgebildet sein, dass sie eine Führungskante 106 aufweisen, die senkrecht zur Linearführungsrichtung LF elastisch verschwenkbar ist (siehe Figur 9).

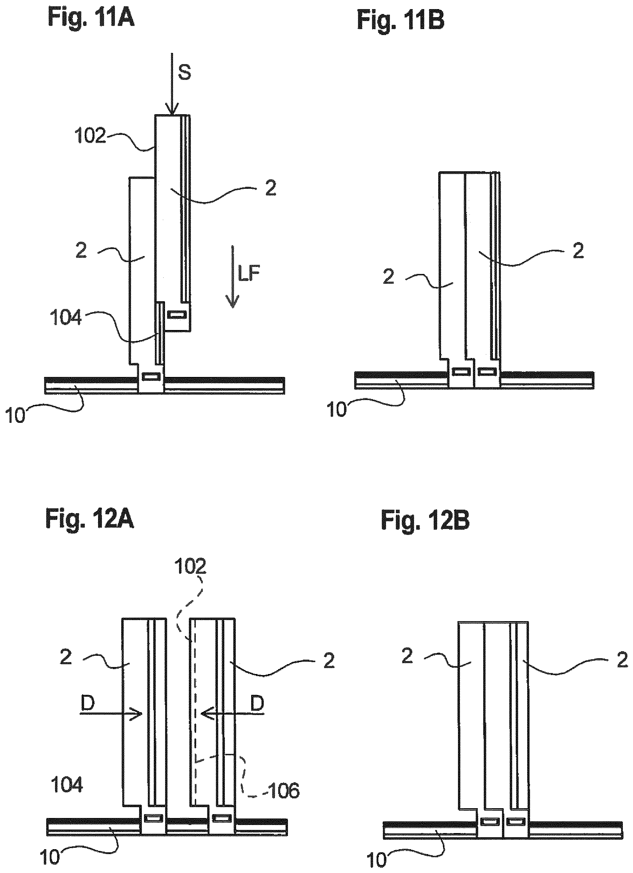

Wie in Figur 11A dargestellt, kann somit ein erstes Bauelement 2 auf ein zweites Bauelement 2, das beispielhaft bereits an einer Tragschiene 10 befestigt ist, an dessen Rückseite aufgeschoben werden, wie durch Pfeil S dargestellt. Hierbei kommen die Führungsprofile 2 des losen Bauelementes 2 in Eingriff mit den Führungsaufnahmen 104 des befestigten Bauelementes 2 und werden durch diese exakt in Linearführungsrichtung LR und senkrecht zur Tragschiene 10 geführt. Das lose Bauelement 2 wird anschließend so weit in Linearführungsrichtung LF verschoben, bis sich auch die Klemmeinrichtung 8 des losen Bauelementes 2 an der Tragschiene 10 festklemmt, wie in Figur 11B dargestellt.

Bei Ausbildung der Führungsprofile 102 mit einer elastisch verschwenkbaren Führungskante 106 ist es zusätzlich möglich, zwei der anreihbaren Bauelemente 2 vor oder nach deren Befestigung an der Tragschiene 10 miteinander zu verrasten, wie in den Figuren 12A, 12B dargestellt. Hierzu werden die beiden Bauelemente 2, wie in Figur 12A durch die Pfeile D dargestellt, seitlich gegeneinander gedrückt. Sobald hierbei die betreffenden Führungsprofile 102 des einen Bauelementes 2 am Gehäuse 4 des anderen Bauelementes 2 in Anlage kommen, werden diese auseinandergespreizt und verrasten anschließend in der jeweiligen Führungsaufnahme 104 des anderen Bauelementes 2. Hiernach nehmen die Bauelemente 2 wiederum die fertig montierte Stellung gemäß Figur 12B ein.

Um bei beiden oben beschriebenen Montagevorgängen eine elektrische/elektronische Kontaktierung zwischen den beiden Bauelementen 2 zu gewährleisten, können diese an beiden Anlegeseiten AS des Gehäuses 4 jeweils Kontaktmittel 108 aufweisen, die beispielsweise federnd gelagert sind. Hierdurch kann die elektrische/elektronische Kontaktierung zwischen den Bauelementen 2 sowohl in Linearführungsrichtung LF als auch senkrecht dazu hergestellt werden.

Es wird darauf hingewiesen, dass alle oben beschriebenen Elemente und Merkmale der verschiedenen Ausführungsformen des erfindungsgemäßen Gegenstandes untereinander einzeln oder in Kombination austauschbar beziehungsweise kombinierbar sind, sofern ein Austausch oder eine Kombination derselben aus technischen Gründen nicht ausgeschlossen ist, wie in den anhängenden Ansprüchen beansprucht.

## Patentansprüche

1. Anreihbares Bauelement (2) mit einem für die Aufnahme eines elektrischen/elektronischen Bauteils (6) vorgesehenen Gehäuse (4) und mit einer Klemmeinrichtung (8) für die Anbringung an einer Tragschiene (10),
wobei die Klemmeinrichtung (8) zwei Rast-/Greifhaken (12), die in zueinander entgegengesetzter Richtung zwischen einer Offenstellung und einer Befestigungsstellung verlagerbar sind,
und einen Kraftumlenkmechanismus (14) zur Verstellung der Rast-/Greifhaken (12) zwischen der Offenstellung und der Befestigungsstellung aufweist, der mittels eines Betätigungselementes (28) betätigbar ist, das von einer Außenseite mit einer Stellkraft (SF) beaufschlagbar ist,
wobei die Rast-/Greifhaken (12) einen freien Öffnungsabstand (fO) begrenzen, der für die lösbare Befestigung an der Tragschiene (10) in der Offenstellung größer und in der Befestigungsstellung geringer ist als eine vorgesehene Tragschienenerstreckung (LT),
wobei der Kraftumlenkmechanismus (14) ein betätigungselementseitiges Auslenkprofil (30) und ein hakenseitiges Verlagerungsteil (16) aufweist, **dadurch gekennzeichnet, dass** das hakenseitige Verlagerungsteil (16) einen Verformungsabschnitt (20) aufweist, der zur Erzeugung einer hakenseitigen Verlagerung durch eine Verlagerungskraft (VF) verformbar ist, wobei zwischen dem Auslenkprofil (30) und dem Verformungsabschnitt (20) ein Gleitkontakt (GK) ausbildbar ist, an dem der Verformungsabschnitt (20) über das Auslenkprofil (30) mit der Verlagerungskraft (VF) beaufschlagbar ist.

2. Bauelement nach Anspruch 1, **dadurch gekennzeichnet, dass** der Verformungsabschnitt (20) zwischen einem Lagerabschnitt (22) und einem mit dem Rast-/G reifhaken (12) verbundenen Bewegungsabschnitt (18) des Verlagerungsteils (16) vorgesehen ist.

3. Bauelement nach Anspruch 2, **dadurch gekennzeichnet, dass** der Bewegungsabschnitt (18) linear geführt ist.

4. Bauelement nach einem der Ansprüche 1 bis 3, **dadurch gekennzeichnet, dass** der Verformungsabschnitt (20) durch paarweise angeordnete Verformungselemente gebildet ist, deren Abstand zueinander durch das Auslenkprofil (30) veränderbar ist.

5. Bauelement nach einem der Ansprüche 1 bis 4, **dadurch gekennzeichnet, dass** der Kraftumlenkmechanismus (14) zwei betätigungselementseitige Auslenkprofile (30) aufweist, die mit jeweils einem hakenseitigen Verlagerungsteil (16) zusammen wirken, wobei diese über den jeweiligen Gleitkontakt (GK) mit zueinander entgegen gesetzten Verlagerungskräften (VF) beaufschlagbar sind.

6. Bauelement nach Anspruch 5, **dadurch gekennzeichnet, dass** die hakenseitigen Verlagerungsteile (16) jeweils einteilig mit dem jeweils zugeordneten Rast-/Greifhaken (12) ausgebildet sind.

7. Bauelement nach Anspruch 5 oder 6, **dadurch gekennzeichnet, dass** an den Rast-/Greifhaken (12) zueinander entgegengesetzt gerichtete Anpressschrägen (38) ausgebildet sind, über die die Rast-/Greifhaken (12) durch Anpressen gegen die Tragschiene (10) entgegen der Vorspannung von der Befestigungsstellung in die Öffnungsstellung aufspreizbar sind.

8. Bauelement nach einem der Ansprüche 1 bis 7, **dadurch gekennzeichnet, dass** das hakenseitige Verlagerungsteil (16) am Gehäuse (4) gelagert ist.

9. Bauelement nach einem der Ansprüche 1 bis 8, **dadurch gekennzeichnet, dass** das Betätigungselement (28) einen Bedienabschnitt (33) aufweist, der wenigstens in der Befestigungsstellung an einer Oberseite (35) des Gehäuses (4) von diesem absteht.

10. Bauelement nach Anspruch 9, **dadurch gekennzeichnet, dass** das Betätigungselement (28) durch die am Bedienabschnitt (33) aufbringbare Stellkraft (SF) entlang einer linearen Führungsrichtung (FR) verlagerbar ist.

11. Bauelement nach Anspruch 9, **dadurch gekennzeichnet, dass** das Betätigungselement (28) durch ein am Bedienabschnitt (33) aufbringbares Drehmoment um eine Achse verdrehbar ist.

12. Bauelement nach einem der Ansprüche 1 bis 11, **dadurch gekennzeichnet, dass** am Gehäuse (4) Linearführungsmittel (100) vorgesehen sind, mittels denen eine senkrecht zum Öffnungsabstand (fO) der Rast-/Greifhaken (12) gerichtete Linearführung erzeugbar ist.

13. Bauelement nach Anspruch 12, **dadurch gekennzeichnet, dass** die Führungsmittel (100) ein sich entlang einer Linearführungsrichtung (LF) erstreckendes Führungsprofil (102) und eine sich entlang der Linearführungsrichtung (LF) erstreckende Führungsaufnahme (104) aufweisen, die zur geführten Aufnahme des Führungsprofils (102) eines weiteren Bauelementes (2) ausgebildet ist, das übereinstimmende Führungsmittel (100) aufweist.

14. Bauelement nach Anspruch 13, **dadurch gekennzeichnet, dass** das Führungsprofil (102) eine senkrecht zur Linearführungsrichtung (LF) federnd verlagerbare Führungskante (106) aufweist.

15. Bauelement nach Anspruch 13 oder 14, **dadurch gekennzeichnet, dass** an dem Gehäuse (4) jeweils zwei paarweise angeordnete Führungsprofile (102) und Führungsaufnahmen (104) vorgesehen sind.

## Claims

1. Stackable module (2) comprising a housing (4) provided to receive an electric/electronic component (6) and comprising a clamping device (8) for attachment to a support rail (10),
wherein the clamping device (8) has two latching/gripping hooks (12), which are displaceable in mutually opposite directions between an open position and a fastening position,
and a force deflection mechanism (14) for adjusting the latching/gripping hooks (12) between the open and the fastening position, which is actuable by means of an actuating element (28), which can be subjected to an actuating force (SF) from an outer side,
wherein the latching/gripping hooks (12) delimit a free opening distance (fO) which, for releasable fastening to the support rail (10), is greater in the open position and smaller in the fastening position than a support rail extension (LT) which is provided, wherein the force deflection mechanism (14) comprises a deflection profile (30) on the deflection element side and a displacement part (16) on the hook side, **characterised in that** the hook-side displacement part (16) comprises a deformation portion (20), which is deformable by a displacement force (VF), wherein a sliding contact (GK) can be formed between the deflection profile (30) and the deformation portion (20), at which the deformation portion (20) can be subjected to the displacement force (VF) via the deflection profile (30).

2. Module according to claim 1, **characterised in that** the deformation portion (20) is provided between a bearing section (22) and a movement section (18) of the displacement part (16), which is connected to the latching/gripping hook (12).

3. Module according to claim 2, **characterised in that** the movement section (18) is configured as linear.

4. Module according to any one of claims 1 to 3, **characterised in that** the deformation portion (20) is formed by deformation elements arranged in pairs, the distance interval between one another can be changed by the deflection profile (30).

5. Module according to any one of claims 1 to 4, **characterised in that** the force deflection mechanism (14) comprises two deflection profiles (30) on the actuation element side, which in each case interact with a hook side displacement part (16), wherein these can be subjected to mutually opposed displacement forces (VF) by means of the respective sliding contact (GK).

6. Module according to claim 5, **characterised in that** the hook-side displacement parts (16) are configured in each case as a single piece with the respective latching/gripping hooks (12).

7. Module according to any one of claims 5 or 6, **characterised in that** mutually opposed oblique pressing elements (38) are formed at the latching/gripping hooks (12), by means of which the latching/gripping hooks (12) can be splayed from the fastening position into the open position by pressing against the support rail (10), counter to the pre-tension force.

8. Module according to any one of claims 1 to 7, **characterised in that** the hook-side displacement part (16) is mounted at the housing (4).

9. Module according to any one of claims 1 to 8, **characterised in that** the actuating element (28) comprises an operating section (33), which in the securing position projects outwards on an upper side (35) of the housing (4).

10. Module according to claim 9, **characterised in that** the actuating element (28) can be displaced along a linear guide direction (FR) by the actuating force (SF) which can be applied at the operating section (33).

11. Module according to claim 9, **characterised in that** the actuating element (28) can be rotated about an axis by means of a torque force which can be applied at the operating section (33).

12. Module according to any one of claims 1 to 11, **characterised in that** linear guide means (100) are provided at the housing (4), by means of which a linear guide effect can be produced which is directed perpendicular to the opening distance (fO) of the latching/gripping hooks (12).

13. Module according to claim 12, **characterised in that** the guide means (100) comprise a guide profile (102) extending along a linear guide direction (LF), and a guide receiver (104) extending along the linear guide direction (LF), which is configured for the guided reception of the guide profile (102) of a further module (2), which comprises matching guide means (100).

14. Module according to claim 13, **characterised in that** the guide profile (102) comprises a guide edge (106) which can be displaced under spring force perpendicular to the linear guide direction (LF).

15. Module according to claim 13 or 14, **characterised in that** in each case two guide profiles (102) and guide receivers (104) are arranged in pairs at the housing (4).

## Revendications

1. Elément de construction montable en série (2) comprenant un boîtier (4) prévu pour le logement d'un composant électrique/électronique (6), et un système de serrage (8) destiné au montage sur un rail porteur (10),
ledit système de serrage (8) comprenant deux crochets d'encliquetage/prise (12), qui peuvent être déplacés dans une direction opposée l'une à l'autre entre une position ouverte et une position verrouillée,
et un mécanisme de déviation de force (14) pour déplacer les crochets d'encliquetage/de prise (12) entre la position ouverte et la position verrouillée, qui peut être actionné au moyen d'un élément d'actionnement (28) sur lequel une force de commande (SF) peut être appliquée de l'extérieur,
les crochets d'encliquetage/de prise (12) délimitant une distance libre d'ouverture (fO) qui est plus grande pour la fixation détachable sur le rail porteur (10) dans la position ouverte et qui est plus petite dans la position verrouillée qu'une étendue prédéfinie de rail porteur (LT),
le mécanisme de déviation de force (14) comprenant un profil de déviation (30) du côté de l'élément d'actionnement et une partie de décalage du côté des crochets (16), **caractérisé en ce que** la partie de décalage du côté des crochets (16) comprend un secteur déformable (20) qui peut être déformé pour réaliser un décalage du côté des crochets par une force de décalage (VF), un contact coulissant (GK) pouvant être formé entre le profil de déviation (30) et le secteur déformable (20), contact sur lequel le secteur déformable (20) peut être appliqué par l'intermédiaire du profil de déviation (30) avec la force de décalage (VF).

2. Elément de construction selon la revendication 1, **caractérisé en ce que** le secteur déformable (20) est prévu entre un secteur de support (22) et un secteur de déplacement (18), relié aux crochets d'encliquetage/de prise (12), d'une partie de décalage (16).

3. Elément de construction selon la revendication 2, **caractérisé en ce que** le secteur de déplacement (18) est guidé de manière linéaire.

4. Elément de construction selon l'une des revendications 1 à 3, **caractérisé en ce que** le secteur déformable (20) est formé par des éléments déformables agencés par paire, dont l'écart est variable l'un par rapport à l'autre par le profil de déviation (30).

5. Elément de construction selon l'une des revendications 1 à 4, **caractérisé en ce que** le mécanisme de déviation de force (14) comprend deux profils de déviation (30) du côté de l'élément d'actionnement, qui agissent ensemble avec chacun une partie de décalage (16) du côté des crochets, ceux-ci pouvant être actionnés par l'intermédiaire du contact glissant (GK) respectif avec des forces de décalage (VF) opposées l'une à l'autre.

6. Elément de construction selon la revendication 5, **caractérisé en ce que** les parties de décalage du côté des crochets (16) sont chacune réalisées d'une seule pièce avec le crochet d'encliquetage/de prise (12) respectivement associé.

7. Elément de construction selon la revendication 5 ou 6, **caractérisé en ce que** des surfaces obliques d'appui (38) dirigées en opposition l'une à l'autre sont réalisées sur les crochets d'encliquetage/ de prise (12), surfaces par l'intermédiaire desquelles les crochets d'encliquetage/de prise (12) peuvent être écartés depuis la position verrouillée dans la position ouverte par l'appui contre le rail porteur (10) à l'encontre de la tension initiale.

8. Elément de construction selon l'une des revendications 1 à 7, **caractérisé en ce que** la partie de décalage du côté des crochets (16) est monté dans le boîtier (4).

9. Elément de construction selon l'une des revendications 1 à 8, **caractérisé en ce que** l'élément d'actionnement (28) comprend un secteur de manœuvre (33), qui s'éloigne du boîtier au moins dans la position verrouillée sur une face supérieure (35) du boîtier (4).

10. Elément de construction selon la revendication 9, **caractérisé en ce que** l'élément d'actionnement (28) peut être décalé par la force de commande (SF) applicable sur le secteur de manœuvre (33) le long d'une direction de guidage (FR) linéaire.

11. Elément de construction selon la revendication 9, **caractérisé en ce que** l'élément d'actionnement (28) peut être pivoté par un couple applicable sur le secteur de manœuvre (33) autour d'un axe.

12. Elément de construction selon l'une des revendications 1 à 11, **caractérisé en ce que** des moyens de guidage linéaire (100) sont prévus sur le boîtier (4), au moyen desquels est réalisé un guidage linéaire dirigé perpendiculairement à la distance d'ouverture (fO) des crochets d'encliquetage/ de prise (12).

13. Elément de construction selon la revendication 12, **caractérisé en ce que** les moyens de guidage (100) comprennent un profil de guidage (102) s'étendant le long d'une direction de guidage linéaire (LF) et un logement de guidage (104) s'étendant le long de la direction de guidage linéaire (LF), logement qui est réalisé pour le logement guidé du profil de guidage (102) d'un autre élément de construction, qui comprend des moyens de guidage (100) concordant.

14. Elément de construction selon la revendication 13, **caractérisé en ce que** le profil de guidage (102) comprend un rebord de guidage (106) décalable élastiquement et perpendiculaire à la direction de guidage linéaire (LF).

15. Elément de construction selon la revendication 13 ou 14, **caractérisé en ce que** respectivement deux profils de guidage agencés par paire et des logements de guidage (104) sont prévus sont le boîtier (4).
